# EUROPEAN PATENT APPLICATION

(11) **EP 3 419 287 A1**
(43) Date of publication of application: **26.12.2018**
(21) Application number: 17290080.5
(22) Date of filing: 19.06.2017
(51) Int. Cl.: H04N 13/00

(54) **AN APPARATUS AND A METHOD FOR DISPLAYING A 3D IMAGE**

(71) Applicant: Nagravision S.A., 1033 Cheseaux-sur-Lausanne (CH)
(72) Inventor: Burckard, Antoine, 78180 Montigny le Bretonneux (FR)
(74) Representative: Korenberg, Alexander Tal

(57) **Abstract**

The present disclosure relates to the projection or otherwise displaying of a virtual image onto a display surface at a given distance from a viewer. The disclosure solves a problem of discomfort experienced by a viewer observing an image having a three-dimensional appearance due to the existence of conflicting physiological cues received by the viewer due to the appearance of the image on a single plane. The problem is addressed by using variable focus lenses between the viewer and the display surface, estimating the real-life depth of a part of the image being observed by monitoring the positions of the viewer's pupils, and altering the focal length of the lenses in order to stimulate the viewer's eyes to focus at a depth other than the distance of the display surface.

## Description

### TECHNICAL DOMAIN

The present disclosure generally relates to the domain of the displaying of images on a display surface in a manner which allows a viewer to perceive different parts of the image as being at different virtual planes having different depths into the image. Embodiments of the disclosure may find use in the domain of virtual reality or augmented reality.

### BACKGROUND

In order to project a clear image of an object on the fovea, a small region of the retina which contains the greatest density of photoreceptors, the focal distance of the eye is controlled by the ciliary muscles to cause the crystalline lens of the eye to either flatten out or to assume a more rounded geometry depending on whether the object is far away from the eye or close to the eye, respectively. This is known as accommodation.

When watching a scene in real life, the human eye has to accommodate according to the distances of the different points of the scene being watched. Physiological cues are received by the brain as to the distance of different objects within the image. For example, if an object can be properly focussed while the ciliary muscles, responsible for altering the optical power of the crystalline lens, are in a relaxed position, this is a physiological cue that the object must be distant, whereas if the ciliary muscles have to work to keep the object in focus, then the object must be close.

Vergence movements of the eyes also provide physiological cues as to the distance of an observed object. Accommodation and vergence are linked in that accommodating to focus on objects at different distances automatically causes corresponding changes in vergence and vice versa. This is known as the accommodation-vergence reflex.

In the domain of three-dimensional representation of a real-life scene, presented as an image on a two-dimensional surface such as a screen or a head-up display or virtual/augmented reality glasses for example, the perception is different from reality because the eyes accommodate in the same way for all parts of the image, irrespective of whether different parts of the image are intended to represent points at different depths or different distances from the viewer.

Most state of the art stereoscopic augmented reality AR or virtual reality VR systems work against the accommodation-reflex in that objects which are meant to be perceived to be at different distances or depths into the image are visualised with the eyes accommodating substantially in one way, whereas they may be viewed with different vergence relationships. This may result in the viewer experiencing fatigue or headaches or any other form of discomfort.

An object of the present disclosure is to provide a more natural sensation for a viewer of an image on a display surface, thereby rendering the experience a more comfortable one.

### BRIEF DESCRIPTION OF THE DRAWINGS

The present disclosure will be better understood thanks to the detailed description which follows and the accompanying drawings, which are given as non-limiting examples of embodiments, namely:
figure 1, showing how the eye accommodates for a first part and a second part of a scene in real life, the first and second parts being at different distances from a viewer's eye;
figure 2, showing how the eye accommodates for different parts of a picture representation of the real-life scene of figure 1, a first part corresponding to the first part of the real-life scene and a second part corresponding to the second part of the real-life scene;
figure 3, showing a variable focus element used in an embodiment described herein;
figure 4, showing a two-display stereoscopic presentation of an image, where the gaze angle of the left and right eyes of a viewer are substantially equal when the viewer observes a distant object in the image;
figure 5, showing how a variable focus element can be employed to cause the viewer's eye to accommodate as if the observed object were at a greater depth from the viewer than the depth of the display surface;
figure 6, showing a two-display stereoscopic presentation of an image, where the gaze angle of the left and right eyes of a viewer are substantially different when the viewer observes a close object in the image;
figure 7, showing how a variable focus element can be employed to cause the viewer's eye to accommodate as if the observed object were at a depth from the viewer which is substantially equal to the depth of the display surface;
figure 8, illustrating how pupil direction detectors may be used to provide 3D information relative to a stereoscopic image in order to control one or more variable focus elements according to an embodiment described herein;
figure 9, showing a head-worn apparatus in which an embodiment described herein may be deployed; and
figure 10, illustrating process steps which may be used in an embodiment disclosed herein.

### DETAILED DESCRIPTION

The present disclosure deals with the displaying, or otherwise rendering, of images on a display surface in a manner which allows a viewer to perceive a three-dimensional view of the images. Embodiments described herein may find use in the domain of virtual reality or augmented reality and may come in the form of glasses, a head-mounted display or a head-up display HUD for example. The display may be an electro-optical display and may be opaque, transparent or semi-reflective for example. The images may be computer-generated images for movies or games or they may be a recording of a real-life scene for example.

Provision is made for an apparatus for presenting an image to a viewer, comprising at least one display surface for presenting the image, at least one variable focus lens placed between the viewer's eye and the display surface, a lens actuator operably coupled to adjust the optical power of the lens, and at least one pupil direction detector configured to monitor a gaze direction of the viewer while the image is being presented. Using at least the gaze direction, the distance of the observed object from the viewer in a corresponding real-life equivalent of the image is estimated and the optical power of the lens is adjusted in order to stimulate the eye to accommodate as if the observed object were placed at the estimated position instead of on the display.

In one embodiment the image is a computer generated image comprising distance data for a number of points in the image and the estimate of the distance of the observed point is made using the gaze angle and the distance data for a nearby point. For example, in a computer game the supposed distance of any of the characters or objects may be known and coded along with the character or object and therefore accessible as metadata related to the character or object.

In another embodiment the image has a corresponding metadata file with image data for a number of points in the image, and the estimate of the distance of the observed point is made using the gaze angle and the distance data for a nearby point in the metadata file. For example, during shooting of a film, distances for certain objects may be measured or estimated and stored in a corresponding metadata file. The metadata in either of the above cases can be made available at viewing time. In yet another embodiment the image is a stereoscopic or binocular image comprising left eye and right eye components, projected onto two separate parts of the display, with one pupil direction detector per eye. There may be one variable focus lens between the viewer and the image or one variable focus lens per eye between the viewer and the image. The distance information may be derived by comparing differences in position of a particular object in the left and right components - in this case it may be necessary to perform some calibration depending on the type of scene, e.g. short distances shot in a street vs. large distances in a mountain scene. Otherwise, the distance information may be more directly derived by sensing the difference in viewing angle between the two pupil position detectors, as will be discussed later.

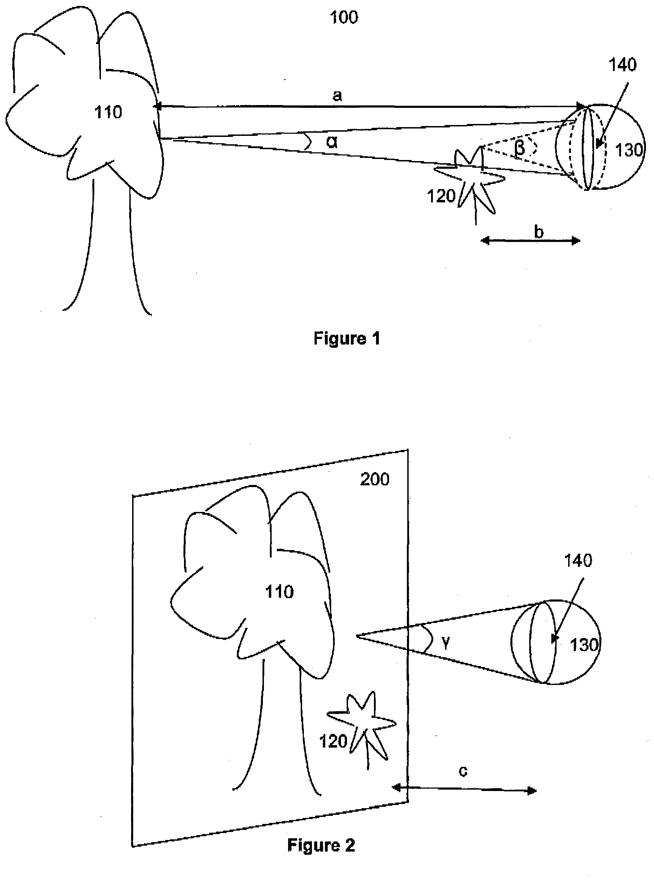

Figure 1 illustrates how light from objects 110, 120 positioned at different distances in a real-life scene 100 arrive at the eye 130 of a viewer observing the real-life scene. Depending on the distance of an object from the eye, light from the object will arrive at the eye at different angles. Light arriving at the eye from points on objects which are closer 120, e.g. at distance b, arrives at an angle *β*, as shown in figure 1, while light arriving at the eye from points on objects which are further away 110, e.g. at distance a, arrives at an angle of *α*. For *a* >> *b, α < β.* The eye is capable of using this phenomenon to activate the ciliary muscles to alter the shape of the crystalline lens 140 in order that objects which are close 120 may be caused to focus properly onto the retina as well as objects which are far off 110. Objects which are closer require the crystalline lens to have more optical power than objects which are far off, requiring the crystalline lens to adopt a rounder form, as illustrated by dotted line. The lens is in a more elongated form when it is relaxed, as illustrated by solid line, allowing for far off objects to come into focus with less optical power.

Figure 2 shows the same real-life scene displayed as an image on a display 200. The display may be transparent, semi-transparent or opaque and may be of a reflective or semi-reflective type. Since the image is projected onto the display, which is at a fixed distance c from the viewer, regardless of whether the viewer observes the part of the display showing the object 120 which is supposed to be close to the viewer or the part of the display showing the object 110 which is supposed to be far from the viewer, the light from any point will always arrive at the viewer's eye 130 at the same angle, shown as γ in figure 2.

Consequently, even if the image contains cues which may be interpreted by the viewer in order to estimate on which plane a certain object in the image lies and at what depth into the image each of the planes are supposed to lie relative to each other, there will be a mismatch between the depth of the plane of the object and the accommodation of the eye when observing that object because the eye accommodates to the distance of the display from the viewer rather than the depth of the plane of the object.

This phenomenon is further exacerbated when the image is a 3D image, which generally provides stronger physiological cues as to the depths of the objects into the image, thereby creating more of a mismatch and hence discomfort for the viewer due to the conflicting cues received.

According to a first aspect, the feeling of discomfort to the viewer can be subdued by stimulating the eye to accommodate in a more natural way so that when the viewer observes an object in the image which is supposed to be far from the viewer, the eye is stimulated to accommodate to a distance which is very much further than the actual distance of the display and when the viewer observes an object in the image which is supposed to be very much closer to the viewer, the eye is stimulated to accommodate to a distance which is very much less than that of the far object.

According to an embodiment, a variable focus element is placed between the eye of the viewer and the display. A variable focus element may be a variable focus lens for example. Variable focus lenses are known, whose focal power may be varied electronically to cause their focal lengths to vary. An example of a suitable variable focus lens is a lens having a refractive power which can be varied, preferably under control of an electronic circuit. Refractive power may also be called optical power, which has a direct influence on the focal length of the lens. When a variable focus lens is placed between the viewer's eye and the display and the focal length of the lens is varied to become a short focal length, the viewer's eye is stimulated to accommodate as if the display were further back than its actual position. If the viewer happened to be observing an object in the image providing cues to suggest that it should be far from the viewer, or deeper into the image, then there is coherence between the perceived distance and the actual accommodation of the viewer's eye, thereby avoiding any of the discomfort which the viewer may have otherwise felt. Similarly, when the focal length of the lens is varied to become a longer focal length, the viewer's eye is stimulated to accommodate to a shorter distance. If the viewer happened to be observing an object in the image providing cues to suggest that it should be nearer to the viewer, or less deep into the image, then there is coherence between the perceived distance and the actual accommodation of the viewer's eye, thereby avoiding any of the discomfort which the viewer may have otherwise felt. The higher the power of a lens, the more the lens will bend light as it travels through the lens. A very convex lens, having a short focal length is therefore said to be a lens of relatively high optical power, capable of providing a large amount of light bending, while a less convex lens, i.e. "flatter", having a long focal length is said to be a lens of relatively low optical power, having less bending effect on the light.

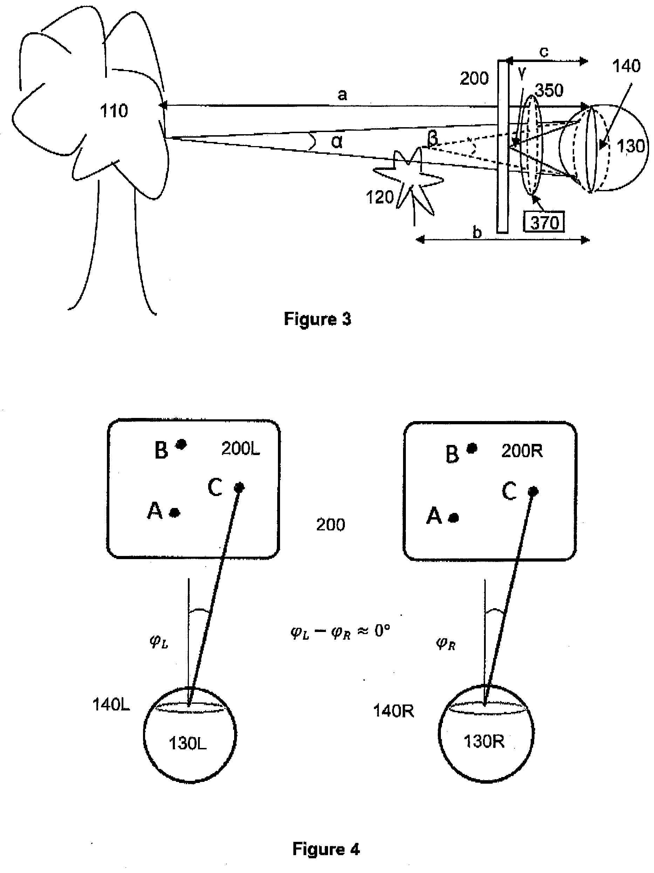

Figure 3 shows how the variable focus element 350 is used to modify the light arriving at the eye from the display to the original angles as if the light were coming from a first depth behind the display *α* or a second depth behind the display *β*. This allows for the accommodation of the eye when the user observes the real-life scene to be reproduced when the viewer observes an image of the real-life scene presented on a display.

According to the embodiment, a pupil direction detector - not shown - is used to observe which part of the image the viewer is watching. Depending on whether the part of the image the viewer is watching is meant to be at a large depth into the image or a shallower depth, the focal power of the lens is adjusted 370 to be either longer or shorter in order for the viewer to experience comfort due to the match between the perceived depth and the accommodation distance to which the viewer's eye has been stimulated to adapt. According to an embodiment, the variable focus element may be placed between the display and both of the viewer's eyes.

According to another embodiment, a different variable focus element is used for each of the viewer's eyes. Each of the two variable focus elements may then be controlled separately 370 based on signals received from different pupil direction detectors corresponding to their respective eye. This also allows to take into account any differences between the viewers' eyes in terms of their respective optical characteristics.

In any of the embodiments which use two pupil direction detectors, one for each eye, the information from both pupil direction detectors may be combined to identify a particular object or region of the image which the viewer is observing. Depth information may then be derived for the identified object or region and this may be used to calculate the focal length or focal power value to be used for adjusting the focal length or focal power of the variable focus element or elements. Combining of the information from the pupil direction detectors may involve finding a point of convergence given the distance of the display from the viewer's eyes and the directions of both pupils. Metadata related to the image - not shown - may then be used to determine which object lies at the position of convergence and at what depth into the image the object is meant to be. Consequently, when the image is a computer generated image, such metadata is readily available. When the image is a representation of a real-life scene, the image may have an associated metadata file providing information about the position of certain objects or regions of the image and their intended or virtual depths within the image. By consulting the metadata file, the depth of the various parts of the image being observed can be used to adjust the optical power or focal length of the variable focus element or elements to stimulate the eyes to accommodate to that depth.

In another embodiment, two variable focus elements, one for each eye, are provided. The image is presented to the viewer as a stereoscopic image having left eye and right eye components. Stereoscopic images work by stimulating the brain to reconstruct the three dimensional aspects of an image when the left eye and right eye components of the image vary slightly. The variation reproduces a phenomenon which is apparent when a viewer looks at a real-life scene using two eyes. If the image seen by the left eye and the image seen by the right eye were to be compared, then it can be seen that there are differences between the two images in the horizontal direction: objects in the image which are far away have less of a horizontal difference, while objects which are close have heightened horizontal difference. The brain uses this information to decide which objects are close and which are far. According to this embodiment, a left image and a right image are presented to the left and right eyes of the viewer. The display can therefore be said to be a combination of a left image display and a right image display. The brain merges the content of the left and right displays to form a single image having perceived depth due to the horizontal variations of the left and right components of the image depending on the depth of an object in the image. This is known as binocular disparity or streopsis and is a strong physiological cue for providing depth information for combining left and right eye views of a scene or image to reconstruct a three-dimensional view of the scene or image. Psychological depth cues also exist, most of which can be simulated in a single two-dimensional image, including occlusion, linear perspective, shading, relative retinal image size, texture gradients and luminance and colour saturation.

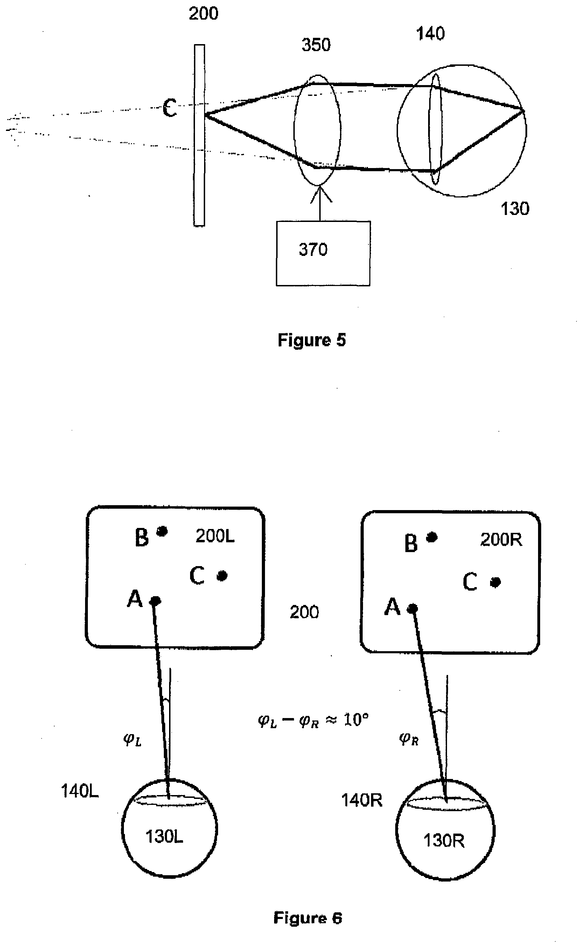

Embodiments which use stereoscopic images therefore do not need any further stimulus to help the brain reconstitute an image having a three-dimensional appearance. Instead, these embodiments use the difference in viewing angles detected by the left and right pupil direction sensors to decide whether the viewer is currently observing an object which is supposed to be close or far away within the image. Figure 4 shows a stereoscopic image 200 with a left eye component 200L and a right eye component 200R. Point A of the image represents a point in a real-life scene which would be 1m away from the viewer. Point B is at 5m. Point C is at 100m. In a stereoscopic image, point C may be considered to be at infinity and it would occur at substantially the same horizontal position in both the left and right components of the stereoscopic image. Consequently, when the viewer observes point C, both pupil direction sensors will record that the left pupil and the right pupil point in substantially the same direction. The difference between the pupil direction detector outputs *ϕ_{L}* - *ϕ_{R}* is substantially zero. The point that the viewer observes is therefore estimated to be at infinity. If the display were 1 m from the viewer, then in order to stimulate the viewer's eyes to accommodate for a distance that is very much larger than 1m, a control signal is applied to the variable focus element to make it have more power than would normally be required to focus at the screen. Consequently, in order for the viewer's eye to keep the point C in focus, the ciliary muscles have to relax to give the crystalline lens less power to compensate for the adjustment made to the variable focus element. This results in the viewer's eyes accommodating as if they were observing a point at infinity, thereby providing the relaxed feeling that the viewer would normally experience when viewing an object at infinity in a real-life scene. The viewer experiences a relaxed feeling when observing point C because the vergence and accommodation cues when observing point C using the embodiment are properly matched. This is illustrated in figure 5.

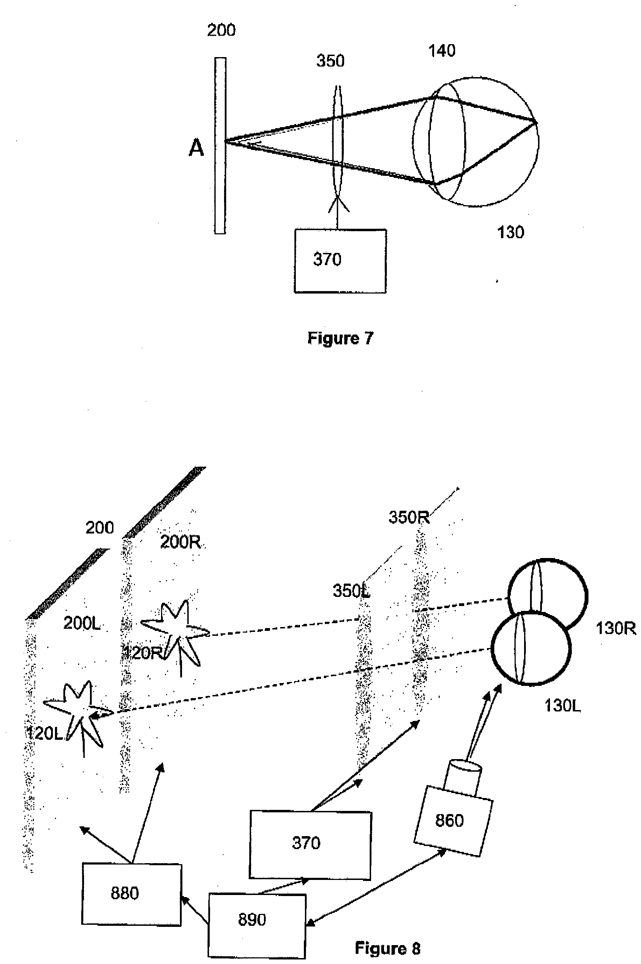

Conversely, point A on the left component of the stereoscopic image and point A on the right component of the stereoscopic image exhibit a large horizontal difference - binocular disparity, which is characteristic for a point which is close to the viewer in a stereoscopic image. This is shown in figure 6. When the viewer observes point A, which is supposed to be only 1 m from the viewer, each of the viewer's pupils must converge towards A in order to recreate a single image of the point A. The difference between the angles observed by the left and right pupil direction sensors *ϕ_{L} - ϕ_{R}* may be 10 degrees for this to happen for example. This gives an indication of the supposed depth of point A. If this depth were 1m, corresponding to the distance that the display is from the viewer, then the viewer's eyes should be allowed to converge at the display. A signal is therefore sent to the variable focus element to cause it to go to a substantially lower power than for point C, thereby stimulating the viewer's eyes to work to bring point A into focus. The ciliary muscles then work to cause the crystalline lens to become shorter and thicker, thereby giving the viewer's crystalline lens the necessary optical power to form a clear image on the retina. The eyes thereby accommodate to focus properly on point A. This again produces a relaxing feeling for the viewer because the vergence and accommodation cues are properly matched. This is illustrated in figure 7.

When the viewer observes point B, the difference between the angles detected by the pupil direction detectors *ϕ_{L} - ϕ_{R}* may be 5 degrees for example, corresponding to the distance that point B is supposed to be within the image, which could be 5m for example. The variable lens is therefore caused to alter its power - more power than for point A but less than for point C, thereby causing the eyes to accommodate properly for an object B that would be at 5m.

By using this phenomenon, an apparatus according to an embodiment can estimate the depth of an observed component within the stereoscopic image by calculating the difference in viewing angles detected by the left and right pupil direction sensors. A signal is then provided to the variable focus elements to cause them to compensate their optical power in order to stimulate the viewer's eyes to accommodate as if the observed point were at the estimated depth. No further external information is necessary for estimating the depths of the observed points in this embodiment.

In embodiments in which metadata is used to find the distance of the observed objects, the metadata file provides the information that point A is at 1 m, point B at 5m and point C at 100m.

Figure 8 shows some of the components which may be used in an apparatus in which an embodiment of the present disclosure may be deployed. A method for displaying an image onto a display surface may be performed under the control of a suitably programmed processor 890. The processor may control an image source 880 for projecting the image 200 onto at least one display surface. In this example the image is a stereoscopic image comprising a left eye component and a right eye component and so there are two display surfaces 200L, 200R, each for presenting one component of the image to each respective eye of the viewer 130L, 130R. The two components of the image exhibit sufficient binocular disparity to provide physiological cues to the viewer's brain to allow the two components to be fused or otherwise combined into a single image which allows the viewer to perceive the image as having three dimension, with different parts of the image appearing to lie on different planes which are at different depths within the image.

The apparatus has a pair of variable focus lenses 350L, 350R for each of the viewer's respective eyes. Each lens is situated between the viewer's eye and the corresponding display surface so that light from the display surface must traverse the lens to get to the viewer's eye. The processor controls the variable focus lenses depending on the depth to be reproduced for the part of the display that the viewer is observing at any time. In order to estimate the depth, a pair of pupil tracking sensors 860 is provided in the apparatus, each configured to track the corresponding pupil. The pupil tracking sensors may also be controlled by the processor, which may receive the pupil directions relative to both eyes and calculate a difference in gaze angles of the viewer's eyes. The larger the depth of the object being observed by the viewer, the smaller will be the difference in gaze angles. Conversely, the shorter the depth of the object being observed, the larger will be the difference in gaze angles. Depending on the estimated depth of the object or part of the image being observed, the processor controls the lens actuators 370 to adjust the focal power of the lenses so that larger depths cause the lens to have a larger power and smaller depths will cause the lenses to have smaller power.

An example of a variable focus element according to any of the embodiments described herein is a variable focus lens. Preferably the variable focus lens should be controlled electronically. Suitable lenses having variable focal length exist and react quickly enough to be used in the embodiments described herein. The system employed in the embodiments is preferably fast enough so that the time for observing eye gaze, estimating the distance of the observed point and adjusting the focal length, is shorter than the time required for the eyes to accommodate.

Different types of display surfaces may be used in the embodiments described herein, such as semi-reflective displays used in head-up displays or opaque displays.

Embodiments may be deployed in smart glasses or head-worn units such as masks or helmets as used in the virtual reality VR or augmented reality AR domains. The images may be movies or computer generated games for example.

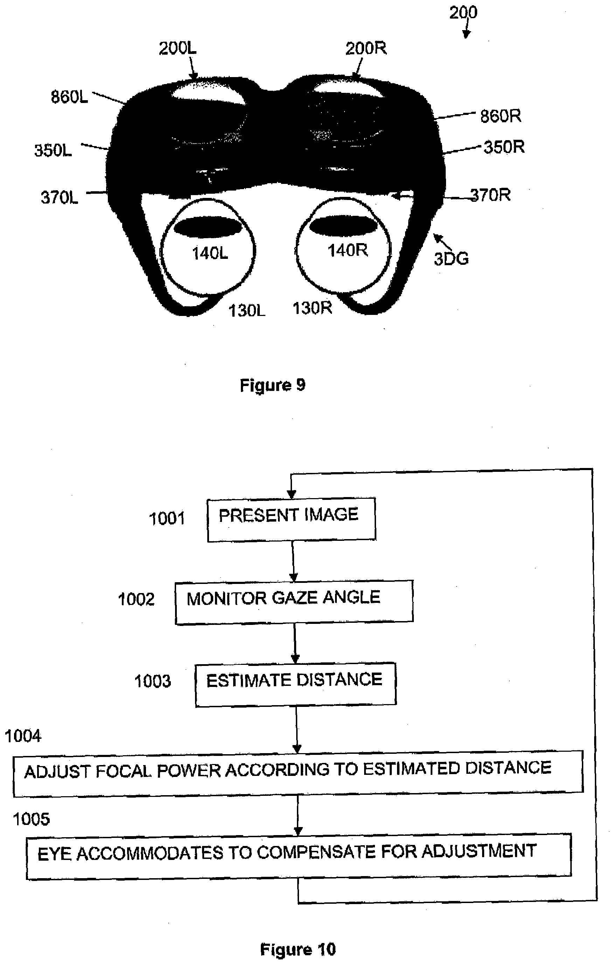

A pair of stereoscopic glasses in which an embodiment of the disclosure is deployed is illustrated in figure 9. The glasses are configured to project left and right components of a stereoscopic image onto left and right display surfaces of the glasses, respectively. The display surfaces may be semi-transparent so that the viewer can see real-life objects as well as projected or otherwise generated images, for example for an augmented reality experience. Semi-reflective components are known for this type of use, usually placed at an angle to the direction of projection of the image. Otherwise, the display surfaces may be opaque so that the viewer only sees generated or otherwise projected images, as in virtual reality environments. A variable focus lens is arranged between the display and each of the viewer's eyes - one lens per eye. There is at least one pupil direction sensor per eye, arranged to monitor the gaze angle of each pupil of the viewer. From at least the gaze angles or gaze angle differences the distance of an object being observed by the viewer may be estimated. There is at least one lens actuator per lens to control the focal power of the lens. The estimated distance of the point being observed is used to drive the lens actuator to adjust the focal power of its associated lens in order to stimulate the viewer's eyes to accommodate to the estimated distance instead of accommodating to the distance of the display. Other forms of head-worn displays may incorporate an embodiment of the disclosure. For example, a mask instead of glasses could be used. Depending on the type of head-worn unit is used, there could be either one variable focus element for both eyes or two variable focus elements, one for each eye.

Figure 10 illustrates a sequence of steps that may be performed in an apparatus in which an embodiment is deployed. At step 1001 the image is presented on the display surface to the viewer. At step 1002 the gaze angles of the viewer's eyes are observed and a difference between the angles is provided. This provides an estimate of the distance or depth of the point being observed by the viewer as shown at step 1003. In other embodiments the pupil direction sensors' outputs are used along with metadata about the depths of different objects in the image to derive the depth data, resulting in step 1003. The focal power of the lens or lenses is then adjusted at step 1004 depending on the estimated or derived depth data, making the lens or lenses more powerful for objects which are far away and less powerful for objects which are closer. This results in the viewer's eyes accommodating properly, at step 1005, for the object being observed.

An apparatus in which an embodiment is deployed may be adapted for use by a person who has impaired or otherwise defective vision. For example, it is well known that due to the aging process, a person's vision may become altered such that he or she is no longer able to focus at points which are very close to the eye. This is known as presbyopia. The apparatus may be calibrated to compensate for the viewer's presbyopia by causing the variable focus element to compensate when the estimated distance of the observed point is less than a predetermined value. The same can be done for embodiments in which the distance is given by a metafile or directly from the image data if the image is computer-generated. Similarly, embodiments may be adapted to compensate for other defects such as long sightedness, short sightedness etc. An exemplary routine for calibrating a system in which an embodiment is deployed, according to the accommodating capability of a particular viewer's eye or eyes, includes adjusting the range of possible focal powers of the system. The viewer may be shown an object whose position in the image may be described as being at very close range. The viewer is allowed to adjust the focal length of the variable focus element so that the object is seen in sharp focus. This sets the value for a first extremity in the range of possible focal powers. The viewer is then shown an object whose position in the image may be described as being at infinity. Again the viewer is allowed to intervene by adjusting the focal power of the lens until the object appears in sharp focus, thereby providing a value for a second extremity in the range of possible foal powers, at the opposite end of the range from the first extremity.

As is usually the case with stereoscopic image preparation, a large depth of field is maintained in order that the viewer will always see a sharp image regardless of whether the system has adjusted the lenses for viewing near or far objects. If this depth of field consideration were not taken into account, then due to the differences in sharpness of different parts of the image, the viewer might have trouble seeing a clear image when the system stimulates the eyes to accommodate to a part of the image which is not properly in focus the focal length being adjusted for a different part of the image. Making sure that all parts of the image are sharp overcomes this problem.

## Claims

1. A method for rendering an image on at least one display surface (200, 200L, 200R) for presentation to a viewer, the image depicting a plurality of objects (110, 120, 120L, 120R, A, B, C) each on virtual planes appearing to be at different depths into the image (a, b), the method comprising:
providing at least a first variable focus element (350, 350L, 350R) between the display surface and at least a first eye of the viewer (130, 130L, 130R), the first variable focus element having variable focal power;
adjusting the focal power of the first variable focus element to a first focal power value when the viewer observes a first object (110, 120) at a first virtual plane appearing to be at a first depth into the image (a, b);
thereby stimulating the eye of the viewer to accommodate to the first depth (a, b).

2. The method according to claim 1, further comprising adjusting the focal power of the first variable focus element to a second focal power value when the viewer observes a second object (120, 110) at a second virtual plane appearing to be at a second depth into the image (b, a), different from the first depth (a, b), thereby stimulating the eye of the viewer to accommodate differently when observing either the first object (110, 120) or the second object (120, 110).

3. The method according to claim 2, the first depth (a) being greater than the second depth (b), said adjustments causing the first focal power value to be higher than the second focal power value.

4. The method according to claim 2, the first depth (b) being less than the second depth (a), said adjustments causing the first focal power value to be lower than the second focal power value.

5. The method according to any of the preceding claims, the display surface being at a predetermined distance from the viewer (c), the method further comprising:
observing a gaze angle (*ϕ_{L}*,*ϕ_{R}*) of the first eye (130, 130L, 130R);
identifying the object being observed by the viewer based at least on the gaze angle (*ϕ_{L}*,*ϕ_{R}*) and the predetermined distance (c);
deriving a depth (a, b) for the virtual plane of the identified object;
either of said focal power adjustments being based on the derived depth (a, b).

6. The method according to claim 5, wherein the image is a computer-generated scene in which each of the objects have corresponding metadata expressing a predetermined depth of the virtual plane of its respective object, the depth of the virtual plane of the identified object being derived using the corresponding metadata.

7. The method according to claims 5 or 6, wherein the image is a recorded real-life scene, the image having a corresponding metadata file comprising depth values for the objects' virtual planes within the image, the virtual plane depth being derived using the metadata file.

8. The method according to any of claims 1 to 4, further comprising:
providing a second variable focus element between the display surface and a second eye of the viewer (130R, 130L), the second variable focus element having variable focal power;
observing a first gaze angle (*ϕ_{L}*, *ϕ_{R}*) of the at least the first eye (130L, 130R);
identifying the object being observed by the viewer (A, B, C) based at least on the first gaze angle of the first eye;
deriving a depth of the virtual plane of the identified object;
further adjusting the focal power of the second variable focus element in the same way as the first focal element;
wherein any of said focal power adjustments are based on the derived depth.

9. The method according to any of claims 1 to 4, the image being a stereoscopic image having a first component (200L) for presentation to the first eye (130L) and a second component (200R) for presentation to a second eye of the viewer (130R), the first and second components being combinable to provide the viewer with a perception of the different depths of the virtual planes of the objects (110,120), the method further comprising:
rendering the first component of the image (200L) on a first display surface presented to the first eye (130L);
rendering the second component of the image (200R) on a second display surface presented to the second eye (130);
providing the first variable focus element between the first display surface and the first eye of the viewer;
providing a second variable focus element between the second display surface and the second eye of the viewer, the second variable focus element having variable focal power;
calculating the first focal power based on a difference between the first gaze angles of the first and second eyes (*ϕ_{L}*, *ϕ_{R}*) and calculating the second focal power based on a difference between the second gaze angles of the first and second eyes (*ϕ_{L}*, *ϕ_{R}*).

10. An apparatus for rendering an image on at least a first display surface for presentation to a viewer, the image including a plurality of objects each on virtual planes appearing to be at different depths into the image, comprising:
at least a first variable focus element through which to render the image to at least a first eye of the viewer;
a lens actuator module operably coupled to adjust the focal power of the variable focus element to a first value when the viewer observes a first object at a first virtual plane appearing to be at a first depth into the image;
thereby stimulating the eye of the viewer to accommodate to the first depth.

11. The apparatus according to claim 10, wherein the lens actuator is further operably coupled to adjust the focal power of the variable focus element to a second focal power value when the viewer observes a second object at a second virtual plane appearing to be at a second depth into the image, different from the first depth, thereby stimulating the eye of the viewer to accommodate differently when observing either the first object or the second object.

12. The apparatus according to either of claims 10 or 11, the display surface being at a predetermined distance from the eye of the viewer, the apparatus further comprising:
at least a first pupil direction sensor configured to detect a gaze angle of the eye of the viewer;
a lens actuator configured to adjust the optical power of the adjustable focus element; and
a processor to identify which of the objects the viewer is observing, based at least on the gaze angle and the predetermined distance of the display surface from the eye of the viewer and for controlling the lens actuator based on a depth of the virtual plane of the observed object, the depth being derived using metadata comprising predetermined depths of the plurality of objects.

13. The apparatus according to claims 11 or 12, the image being a stereoscopic image having a first component for presentation to the first eye and a second component for presentation to a second eye of the viewer, the first and second components being combinable to provide the viewer with a perception of the different depths of the virtual planes of the objects, the apparatus further comprising:
a second display surface for rendering the second component of the image, the first component of the image being rendered on the first display surface;
a second variable focus element between the second display surface and the second eye of the viewer, the first variable focus element being placed between the first display surface and the first eye of the viewer;
a second pupil direction sensor to detect a gaze angle of the second eye of the viewer;
the processor being further configured to calculate a first focal power for adjusting the first variable focus element when the viewer observes the first point of the image and a second focal power for adjusting the second variable focus element when the viewer observes the second point of the image, the focal powers being calculated based on a difference between the gaze angles of the first and second eyes when the viewer observes the respective objects of the image.

14. The apparatus according to claim 13, the apparatus being a head-worn display unit for displaying an image with a three-dimensional appearance to a wearer.
